(19) Europäisches Patentamt
European Patent Office
Office européen des brevets

(11) **EP 2 174 916 B1**

(12) **FASCICULE DE BREVET EUROPEEN**

(45) Date de publication et mention
de la délivrance du brevet:
**20.09.2017 Bulletin 2017/38**

(51) Int Cl.:
***C03B 37/016*** (2006.01)     ***C03B 19/12*** (2006.01)
***C03C 1/00*** (2006.01)     ***C03C 3/06*** (2006.01)

(21) Numéro de dépôt: **08370021.1**

(22) Date de dépôt: **09.10.2008**

(54) **Monolithes de silice de haute pureté et son procédé de synthèse**

Monolithen aus sehr reinem Silizium und entsprechendes Syntheseverfahren

Highly pure silica monoliths and method of synthesizing same

(84) Etats contractants désignés:
**AT BE BG CH CY CZ DE DK EE ES FI FR GB GR HR HU IE IS IT LI LT LU LV MC MT NL NO PL PT RO SE SI SK TR**

(43) Date de publication de la demande:
**14.04.2010 Bulletin 2010/15**

(73) Titulaires:
- **Université Des Sciences Et Technologies De Lille
  59655 Villeneuve d'Ascq Cedex (FR)**
- **Centre National de la Recherche Scientifique
  75794 Paris Cedex 16 (FR)**

(72) Inventeurs:
- **Bouazaoui, Mohamed
  59560 Villeneuve d'Ascq (FR)**
- **Capoen, Bruno
  59810 Lesquin (FR)**
- **El Hamzaoui, Hicham
  59000 Lille (FR)**
- **Bigot, Laurent
  59260 Hellemmes (FR)**
- **Bouwmans, Géraud
  59000 Lille (FR)**

(74) Mandataire: **Matkowska, Franck
Matkowska & Associés
9, rue Jacques Prévert
59650 Villeneuve d'Ascq (FR)**

(56) Documents cités:
**EP-A- 0 385 753     WO-A-2004/083144
FR-A- 2 333 628     GB-A- 2 346 141
US-A1- 2001 003 910     US-A1- 2003 078 153**

- **DATABASE WPI Week 200346 Thomson Scientific, London, GB; AN 2003-491233 XP002509025 & KR 2030 022 957 A (RES INST IND SCI & TECHNOLOGY) 19 mars 2003 (2003-03-19)**
- **DATABASE WPI Week 200347 Thomson Scientific, London, GB; AN 2003-501392 XP002509026 & KR 2030 022 953 A (RES INST IND SCI & TECHNOLOGY) 19 mars 2003 (2003-03-19)**
- **DATABASE WPI Week 198642 Thomson Scientific, London, GB; AN 1986-275944 XP002509027 & JP 61 201627 A (SUMITOMO ELECTRIC IND CO) 6 septembre 1986 (1986-09-06)**

**Description**

**Objet de l'invention**

La présente invention se rapporte à un monolithe de silice de haute pureté et à un procédé de synthèse sol-gel de ce type de monolithes. Ces monolithes pouvant par exemple être utilisés pour des applications optiques, tel que la fabrication de fibres optiques.

**Etat de la technique**

Des applications nécessitant l'utilisation de verres de silice de grande pureté sont de plus en plus courantes. En particulier, ces types de verres sont nécessaires à de nombreuses applications optiques, tel que les fibres optiques, les technologies lasers, etc. Ils doivent présenter une absorbance et une diffusivité minimum dans les longueurs d'ondes utilisées. Dans ce contexte, l'homogénéité et la pureté sont des paramètres clefs dominants ces propriétés.

Traditionnellement, ces types de verres sont produits par fusion de quartz naturel ou de silices synthétiques dans des creusets à haute température (1700-2000°C). Néanmoins, ce type de procédé souffre de nombreux inconvénients, tel que le niveau d'impureté du matériau initial, la contamination par le creuset, les contraintes résiduelles dues à la solidification, etc.

Une autre méthode consiste au dépôt du verre à partir de précurseurs gazeux tel que du $SiCl_4$. Ces précurseurs sont décomposés à haute température et en présence d'oxygène. Le document FR2333628 décrit une telle méthode utilisant une flamme. L'inconvénient de ce type de méthode est qu'elle nécessite généralement des investissements lourds, des mélanges de gaz complexes et des géométries de tuyères très spécialisées pour parvenir à contrôler précisément le comportement de la flamme utilisé pour le dépôt.

Une alternative à ces procédés est l'utilisation de procédés du type sol-gel, en particulier selon la voie dite « polymérique » ou « directe ». Ce type de procédé est basé sur des réactions chimiques d'hydrolyse et de condensation pour la formation de gels (et par la suite de verres) à partir de précurseurs moléculaires. La première étape consiste donc en la préparation d'une solution à partir de précurseurs métalliques sous forme de sels ou de composés organométalliques (généralement des alkoxydes de formule $M(OC_nH_{2n+1})_4$. Cette solution est le siège de deux réactions successives qui sont l'hydrolyse et la condensation. L'hydrolyse d'un alkoxyde de silicium de type $Si(OC_nH_{2n+1})_4$ peut s'écrire dans le cas général :

$$Si(OR)_4 + H_2O \rightleftharpoons HOSi(OR)_3 + ROH \quad \text{(éq.1)}$$

où $R$ désigne le groupement alkyle $C_nH_{2n+1}$.

Selon la quantité d'eau et de catalyseur (acide ou base), l'hydrolyse est partielle ou totale. Lorsque l'hydrolyse concerne tous les groupements de l'alkoxyde, on écrira :

$$Si(OR)_4 + 4H_2O \rightleftharpoons Si(OH)_4 + 4ROH \quad \text{(éq.2)}$$

Deux molécules d'alkoxyde de type $Si(OC_nH_{2n+1})_4$ partiellement hydrolysées en $HO\text{-}Si(OC_nH_{2n+1})_3$ peuvent établir un pont siloxane par une réaction de condensation avec libération d'eau (éq.3) (homocondensation) ou d'alcool (hétérocondensation) (éq.4) :

$$(OR)_3Si{-}OH + HO{-}Si(OR)_3 \rightleftharpoons (OR)_3Si{-}O{-}Si(OR)_3 + H_2O \quad \text{(éq. 3)}$$

Ou:

$$(OR)_3Si{-}OR + HO{-}Si(OR)_3 \rightleftharpoons (OR)_3Si{-}O{-}Si(OR)_3 + ROH \quad \text{(éq.4)}$$

Les réactions de condensation conduisent à la polymérisation du précurseur hydrolysé et, par conséquent, à la formation d'amas oligomériques contenant plusieurs atomes de silicium. Ces réactions sont catalysées par des acides ou des bases. Néanmoins, les vitesses de réactions sont très différentes selon le pH du milieu. En particulier, en milieu acide, l'hydrolyse est favorisée par rapport à la condensation.

Ces amas sont dispersés dans un liquide et forment ainsi le « SOL ». L'agglomération de ces amas conduit à la formation du réseau solide du gel. Ce gel subit par la suite plusieurs étapes de séchage et de vieillissement. Le gel obtenu après séchage, appelé « xérogel » est un matériau poreux, en l'occurrence une silice poreuse, avec des groupements silanols (Si-OH) à la surface. Ces pores permettent également l'adsorption physique de molécules, d'atomes ou d'ions. La taille des pores dépend des conditions de synthèse et de séchage

Enfin, dans une dernière étape le xérogel est densifié par une étape de cuisson à haute température pour obtenir un verre.

Le document US7125912 décrit en détail un tel procédé en milieu acide. Ce document s'attache principalement à réduire les problèmes d'homogénéité produit par le mode de préparation du sol. Ce document propose la préparation du sol à basse température, de manière à ce que les réactions d'hydrolyse et de condensation ne commencent qu'une fois le sol homogène. Cette procédure est particulièrement utile dans le cas de synthèses en milieu acide, où les cinétiques sont plus rapides. Les documents brevets WO2004/083144, GB-A-2 346 141, US2001/003910A1, US2003/078153, décrivent d'autres procédés de synthèses de silice par voie sol-gel.

Une limitation importante de ce type de procédé est due au contrôle de la porosité, et, en fonction de celle-ci, les cinétiques de séchage seront plus ou moins rapides. Ces cinétiques de séchage sont aussi liées aux dimensions des gels produits.

## Buts de l'invention

La présente invention vise à fournir un monolithe de silice de haute pureté à partir d'un procédé de type sol-gel. Elle vise également un procédé pour l'obtention de ce type de monolithe.

Plus généralement, la présente invention vise à améliorer les propriétés des verres produits selon le procédé sol-gel, ainsi que des intermédiaires utilisés pour y parvenir. Ces améliorations apparaîtront plus clairement dans la description détaillée de l'invention.

## Résumé de l'invention

La présente invention divulgue un procédé de synthèse d'un monolithe de silice selon un procédé dit « sol-gel », tel que défini dans la revendication 1.

Selon des modes préférés de l'invention, le procédé comporte au moins une, ou une combinaison quelconque appropriée des caractéristiques suivantes :

- la solution comporte en outre un additif de séchage comprenant du Diméthylformamide ;
- les constituants pour la formation du sol sont présents dans les proportions: 1 partie de tétraéthoxysilane ou de tétraméthoxysilane, 4 parties de méthanol ou d'éthanol, 2 parties de $H_2O$, 1 partie de Diméthylformamide et 0,005 partie de $NH_4OH$;
- le quatrième traitement thermique comporte une étape de purge qui se fait en présence d'un mélange de $O_2/Cl_2$ et une étape de vitrification en présence d'Hélium ;
- le Xérogel a une porosité moyenne entre 5 nm et 23 nm ;
- le Xérogel a une porosité moyenne de 5 nm lorsque celui-ci est obtenu à partir de Tétraméthyloxysilane ;
- le Xérogel a une porosité moyenne de 23 nm lorsque celui-ci est obtenu à partir de Tétraéthyloxysilane ;

Par ailleurs, l'invention divulgue aussi une utilisation du monolithe selon l'invention pour la réalisation de fibres optiques.

## Brève description des figures

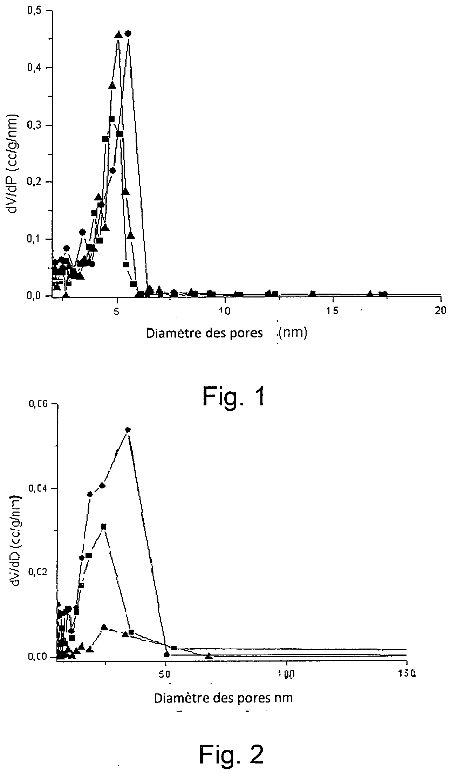

La figure 1 représente les courbes de distribution des tailles de pores des xérogels des exemples 1 (▲) et 2 (■), ainsi que la distribution après traitement sous vide à 180°C (●) des échantillons 1 et 2.

La figure 2 représente les courbes de distribution des tailles de pores des xérogels des exemples 3 (▲) et 4 (■), ainsi que la distribution après traitement sous vide à 180°C(●) des échantillons 3 et 4.

La figure 3 représente les spectres Macro-Raman des verres de silice des exemples 15 (a), 16 (b) et 14 (c).

La figure 4 représente une fibre optique microstructurée 1 dont le coeur 3 est constitué d'un verre de silice produit selon le procédé de la présente invention.

La figure 5 représente la courbe d'atténuation typique obtenue pour des coeurs de fibres optiques microstructurées tel que représentées à la figure 4 et comprenant un coeur de silice produit par le procédé selon la présente invention. La figure 6 représente les spectres Macro-Raman obtenus sur les échantillons des exemples 1 et 17.

## Description détaillée de l'invention

Le procédé de production de verre de silice selon la présente invention comprend 5 étapes principales :

- la préparation d'un sol comprenant au moins un alkoxyde de silicium, au moins un catalyseur, de l'eau, éventuellement un solvant organique et un additif de séchage ;
- la polymérisation du sol produit à l'étape 1, jusqu'à obtention du gel au moyen d'un premier traitement thermique;
- le séchage du gel dans un second traitement thermique permettant aussi une meilleure évacuation des contaminants organiques volatils;
- La transformation du gel en xérogel par un troisième traitement thermique ;
- la déshydratation et la densification du xérogel, jusqu'à obtention du verre recherché par un quatrième traitement thermique.

Dans la présente invention, le second traitement thermique a été amélioré de manière à permettre un meilleur séchage et une élimination des résidus organiques plus poussée.

Dans des formes préférées de l'invention, la composition du sol, les paramètres de polymérisation du « gel » ont aussi été améliorés.

La préparation du sol de la présente invention utilise le Tetramethylorthosilane (TMOS) ou Tetraethylorthosilane (TEOS) comme précurseurs.

Le sol produit présente un pH basique. Dans ce cas, le $NH_4OH$ est bien adapté à la catalyse des réactions de gélification.

Le solvant organique est le méthanol ou l'éthanol.

Parmi les additifs de séchage, le N,N-diméthylformamide(DMF) est choisi.

Dans une forme de réalisation de l'invention, le rapport d'hydrolyse $Rh=[H_2O]/[Si]$ est compris entre 1,5 et 4 ; le rapport alcool/alcoxyde $Rs=[alcool]/[Si]$ est compris entre 2 et 5 ; le rapport DMF/alcoxyde Rd est compris entre 1 et 3 et le rapport catalyseur/alcoxyde Rc est compris entre 500 et 20000 ppm, ce qui correspond à un pH compris entre 9,2 et 11,3.

Lors du premier traitement thermique, ces sols sont placés dans des récipients (ou conteneurs) fermés et de forme quelconque, par exemple cylindriques ou parallélépipédiques. Ces récipients détermineront la forme finale du monolithe. Ces conteneurs sont placés dans une étuve à une température inférieure à la température d'ébullition de l'eau et des solvants, par exemple 50°C, et, pour une période de plusieurs semaines, 4 semaines par exemple. Au terme de cette période, le gel est formé.

Lors du second traitement thermique, le gel formé est placé dans une étuve à une température inférieure à 100°C, soit environ 90°C pour au moins 24h, de manière à évacuer la majeure partie des solvants et de l'eau contenue dans le gel, sans provoquer de moussage ou de fissuration. Ce traitement est suivi d'un accroissement de température sous forme d'une rampe de chauffage entre environ 90°C et 180°C sous vide primaire (environs $10^{-1}$ Torr). La rampe de température est comprise entre 0,1 et 5°C/min. Le monolithe est ensuite maintenu pour une période de plusieurs jours sous vide vers 180°C.

Lors du troisième traitement thermique, une nouvelle augmentation de température depuis 180°C jusqu'à une température de séchage est appliquée. Cette augmentation de température est effectuée à une vitesse comprise entre 1 et 50°C/min. Après avoir atteint la température de séchage, cette température est maintenue au moins une heure. Cette température de séchage est comprise entre environ 850 et 1000°C. Ce troisième traitement peut être conduit sous vide, ou à la pression atmosphérique. On obtient au terme de cette étape un xérogel poreux.

A partir des xérogels stabilisés et préparés selon la méthode présentée ci-avant, des verres de silice transparents et denses (d = 2,2) ont été obtenus sans moussage. Le moussage apparaît si le traitement thermique est trop brutal (montée rapide en température) : la porosité se ferme alors rapidement, emprisonnant des molécules d'eau issues du processus de condensation des silanols. Cette eau, mise sous pression, conduit à la formation de nombreuses microbulles qui déforment le matériau et génèrent une structure de silice expansée. Afin d'éviter le moussage lors du quatrième traitement thermique, il faut de préférence traiter les xérogels à 1100°C pendant plusieurs heures (au moins 1 h) en utilisant une rampe d'environs 1°C/min entre 850°C et 1100°C. Les verres obtenus sont alors transparents.

Le xérogel poreux séché entre environ 850°C et 1000°C est encore déshydraté au moyen d'un quatrième traitement thermique sous oxygène d'abord, ensuite sous un mélange $O_2+Cl_2$, et à nouveau sous $O_2$ afin d'évacuer le $Cl_2$ résiduel. Il est ensuite densifié à une température d'environ 1300°C pendant quelques heures. Au terme de ce traitement, les monolithes sont transparents et exempts de bulles. Dans ce cas, la concentration en groupement -OH, tel que révélée par spectroscopie infrarouge à transformée de Fourrier est fortement réduite, et typiquement inférieure à 1 ppm.

### Exemples

### Exemple 1

Un sol est préparé à base de TMOS, méthanol, $H_2O$, DMF et $NH_4OH$, dans un rapport 1 :4 :2 :1 :0,005. La solution obtenue est placée dans des récipients pyrex™ cylindriques fermés. Ces conteneurs sont placés à l'étuve à 50°C pour plusieurs semaines. La dimension des monolithes produits de cette manière est limitée à environs 10 cm. Au-delà de cette limite, le monolithe se fissure au cours du vieillissement.

Les gels formés (de taille centimétrique de l'ordre de 1 à 3 cm) sont par la suite traités à 90°C pendant 24h. Ce traitement est suivi d'un traitement sous vide primaire ($10^{-1}$ *Torr*) : la rampe de température entre 90°C et 180°C est de 0.1°C/min. Le monolithe est ensuite maintenu sous vide à 180°C pendant 120h. Après cette étape, le gel est chauffé avec une rampe de température de 1°C/min et entre 180°C et 850°C. Le gel est ensuite maintenu une heure à 850°C pour obtenir un xérogel poreux.

### Exemple 2

Les paramètres sont identiques à l'exemple 1, excepté la température en fin de déshydratation, laquelle est de 1000°C au lieu de 850°C dans l'exemple 1

### Exemples 3 à 12

| Exemples | T (°C) | Rampe (°C/min) | Commentaire sur la qualité du monolithe |
|---|---|---|---|
| 3 | 850 | 1 | intact |
| 4 | 1000 | 1 | intact |
| 5 | 850 | 5 | intact |
| 6 | 1000 | 5 | intact |
| 7 | 850 | 10 | intact |
| 8 | 1000 | 10 | intact |
| 9 | 850 | 50 | intact |
| 10 | 1000 | 50 | intact |
| 11 | 850 | 50 | fissuration |
| 12 | 1000 | 50 | fissuration |

### Commentaire sur les exemples 3 à 10

Un sol est préparé à base de TEOS, éthanol, $H_2O$, DMF et $NH_4OH$, dans un rapport 1 :4 :2 :1 :0,005. La solution obtenue est placée dans des récipients pyrex™ cylindriques fermés. Ces conteneurs sont placés à l'étuve à 50°C pour plusieurs semaines. Dans ce cas, des monolithes de gel de dimensions supérieures à 10 cm ont pu être obtenus.

Les gels formés sont par la suite traités à 90°C pendant 24h. Ce traitement est suivi d'un traitement sous vide primaire ($10^{-1}$ *Torr*) : la rampe de température entre 90°C et 180°C est de 0.1°C/min. Le monolithe est ensuite maintenu sous vide à 180°C pendant 120h. Après cette étape, le gel est chauffé avec une rampe de température entre 1°C/min et 50°C/min, entre 180°C et 850°C ou 1000°C. Le gel est ensuite maintenu une heure à 850°C ou 1000°C pour obtenir un xérogel poreux. Les deux paramètres variables selon les exemples sont définis dans le tableau ci-après. Le monolithe est ensuite inspecté visuellement.

### Exemples 11 et 12 (comparatifs)

Les exemples 11 et 12 correspondent aux exemples 3 à 15, à l'exception du traitement entre 90 et 180°C et le maintien à 180°C, lequel est effectué à pression atmosphérique et non sous vide. On y observe une fissuration pour des vitesses de montée en température nettement plus faibles, signe d'une porosité plus faible et/ou d'un résidu volatile plus important.

## Exemple 13

Le xérogel de l'exemple 1 est ensuite chauffé sous oxygène à 700°C, ensuite sous un mélange $O_2/Cl_2$ à 900°C pendant 2h, à nouveau sous $O_2$ pendant 3h à 1000°C, ensuite, une rampe de 1°C/min sous He pour amener le monolithe à 1300°C, température à laquelle il est maintenu 2h.
Au terme de ces traitements, l'échantillon est exempt de bulle et de fissure.

## Exemple 14

Le xérogel de l'exemple 2 est ensuite chauffé sous oxygène à 700°C, ensuite sous un mélange $O_2/Cl_2$ à 900°C pendant 2h, à nouveau sous $O_2$ pendant 3h à 1000°C, ensuite, une rampe de 1°C/min sous He pour amener le monolithe à 1300°C, température à laquelle il est maintenu 2h.
Au terme de ces traitements, l'échantillon est exempt de bulle et de fissure.

## Exemple 15

Le xérogel de l'exemple 3 est ensuite chauffé sous oxygène à 700°C, ensuite sous un mélange $O_2/Cl_2$ à 900°C pendant 2h, à nouveau sous $O_2$ pendant 3h à 1000°C, ensuite, une rampe de 1°C/min sous He pour amener le monolithe à 1300°C, température à laquelle il est maintenu 2h.
Au terme de ces traitements, l'échantillon est exempt de bulle et de fissure.

## Exemple 16

Le xérogel de l'exemple 4 est ensuite chauffé sous oxygène à 700°C, ensuite sous un mélange $O_2/Cl_2$ à 900°C pendant 2h, et à nouveau sous $O_2$ pendant 3h à 1000°C, ensuite, une rampe de 1°C/min sous He pour amener le monolithe à 1300°C, température à laquelle il est maintenu 2h.
Au terme de ces traitements, l'échantillon est exempt de bulle et de fissure.

## Exemple 17 (comparatif)

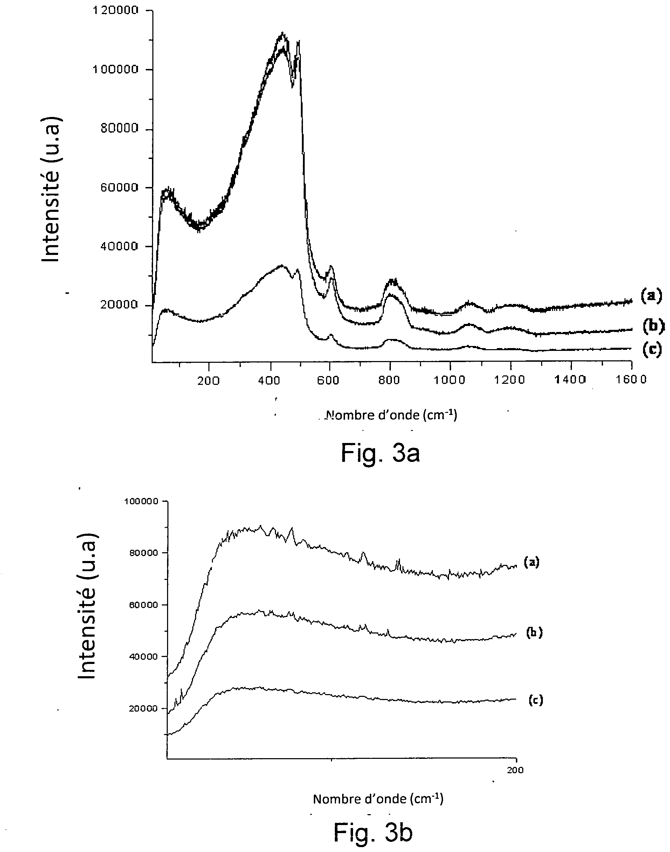

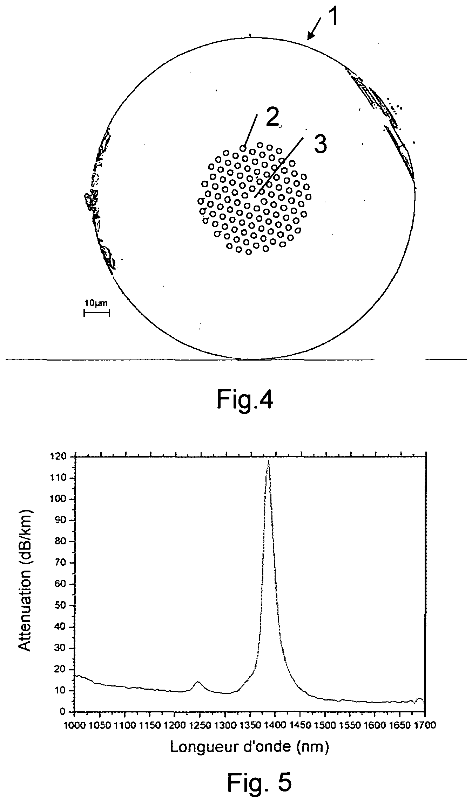

Les paramètres sont identiques à ceux de l'exemple 1 excepté que le traitement entre 90 et 180°C est effectué à pression atmosphérique, sous air.
Les spectres macro-Raman représentés à la figure 3 des échantillons 14 à 16 sont caractéristiques des verres de silice. En outre, les spectroscopies infrarouges à transformée de Fourrier montrent que les verres obtenus à partir de TEOS et stabilisés à 1000°C présentent des concentrations en -OH inférieures à 1 ppm, cette limite étant la limite de détection du dispositif de mesure.
L'étirage d'un monolithe selon l'exemple 16 sous forme de capillaire, puis l'assemblage d'une structure de capillaire permet le tirage d'une fibre micro-structurée 1 comprenant des vides 2 (voir figure 4). Le verre de silice produit selon le procédé de la présente invention constitue le coeur 3 de la fibre micro-structurée. L'atténuation de signaux optiques ayant une longueur d'onde d'environ 1500nm injectés au coeur de l'assemblage est environ de 5 dB/km. C'est environ la moitié de ce qui est généralement observé sur des fibres obtenues à partir de verres de silice commerciaux prévus pour ce type d'application. Le pic observé à 1400 nm est dû à la contamination par les groupements hydroxyls (-OH) lors de l'assemblage des capillaires (groupements OH en surface).

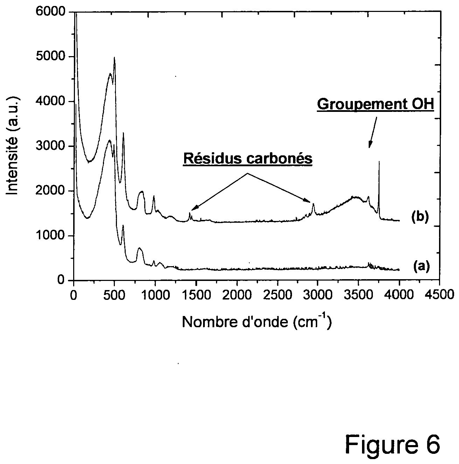

La figure 6 montre que, dans le cas du monolithe non traité sous vide à 180 °C, le spectre Raman présente des bandes supplémentaires (courbe (b), exemple 17) par rapport à celui qui a été traité sous vide (courbe (a), exemple 1). Deux bandes situées vers 1430, 2944 $cm^{-1}$ sont caractéristiques des résidus organiques. Une large bande entre 3000 et 3800 cm-1 caractéristique des groupements -OH est aussi présente dans le cas de l'échantillon 17.
Ainsi, le traitement thermique sous vide à 180 °C permet une meilleure élimination les résidus organiques et des groupements -OH dans les monolithes.

## Revendications

**1.** Procédé de synthèse d'un monolithe de silice selon un procédé dit « sol-gel » comportant les étapes suivantes :

• hydrolyse de tétraéthoxysilane ou de tétraméthoxysilane pour former un précurseur hydrolyse suivie d'une condensation dudit précurseur hydrolyse en présence de méthanol ou d'éthanol, en présence d'eau et de NH4OH pour former des amas oligomériques contenant plusieurs atomes de silicium ;
• dispersion desdits amas oligomériques dans une solution pour former un sol ;
• polymérisation du sol pour obtenir un gel par un premier traitement thermique, à une température inférieure à la température d'ébullition des constituants du sol;
• séchage du gel par un second traitement thermique comportant une exposition du gel à environ 90°C pendant au moins 24 heures suivi d'un accroissement de température sous vide entre environ 90°C et environ 180°C, ledit accroissement de température étant compris entre 0,1 °C/min et 5 °C/min suivi d'un maintien à environ 180°C sous vide pendant au moins 120h;
• transformation du gel en xérogel par un troisième traitement thermique, ledit traitement thermique comportant un maintien à une température de séchage comprise entre 850 et 1000°C durant au moins une heure ;
• déshydratation et densification du xérogel jusqu'à obtention du monolithe de silice par un quatrième traitement thermique, ledit quatrième traitement thermique comprenant un maintien à une température supérieure à 1100° durant au moins une heure.

**2.** Procédé selon la revendication 1 dans lequel ladite solution comporte en outre un additif de séchage comprenant du Diméthylformamide.

**3.** Procédé selon l'une quelconque des revendications précédentes dans lequel, les constituants pour la formation du sol sont présents dans les proportions:

1 partie de tétraéthoxysilane ou de tétraméthoxysilane, 4 parties de méthanol ou d'éthanol, 2 parties de $H_2O$, 1 partie de Diméthylformamide et 0.005 partie de $NH_4OH$.

**4.** Procédé selon l'une quelconque des revendications précédentes dans lequel le quatrième traitement thermique comporte une étape de purge qui se fait en présence d'un mélange de $O_2/Cl_2$ et une étape de vitrification en présence d'Hélium.

**5.** Procédé selon l'une quelconque des revendications précédentes dans lequel ledit Xérogel a une porosité moyenne entre 5 nm et 23 nm.

**6.** Procédé selon l'une quelconque des revendications précédentes dans lequel ledit Xérogel a une porosité moyenne de 5 nm lorsque celui-ci est obtenu à partir de Tétraméthyloxysilane.

**7.** Procédé selon l'une quelconque des revendications précédentes dans lequel ledit Xérogel a une porosité moyenne de 23 nm lorsque celui-ci est obtenu à partir de Tétraéthyloxysilane.

**8.** Utilisation d'un monolithe de silice obtenu par le procédé de l'une quelconque des revendications précédentes pour la réalisation de fibres optiques.

**Patentansprüche**

**1.** Verfahren zur Herstellung eines Siliciummonolithen gemäß einem "Sol-Gel-Verfahren" mit den folgenden Schritten:

- Hydrolyse von Tetraethoxysilan oder Tetramethoxysilan zur Bildung eines Hydrolysevorläufers, gefolgt von einer Kondensation des Hydrolysevorläufers in Gegenwart von Methanol oder Ethanol, in Gegenwart von Wasser und von $NH_4OH$, um oligomere Anhäufungen zu bilden, die mehrere Siliciumatome enthalten;
- Dispergieren der oligomeren Anhäufungen in einer Lösung, um ein Sol zu bilden;
- Polymerisieren des Sols, um ein Gel zu erhalten mittels einer ersten Wärmebehandlung bei einer Temperatur unterhalb der Siedetemperatur der Bestandteile des Sols;
- Trocknen des Gels mittels einer zweiten Wärmebehandlung, wobei das Gel für mindestens 24 Stunden einer Umgebung von 90°C ausgesetzt wird, gefolgt von einer Temperaturerhöhung im Vakuum zwischen etwa 90°C und etwa 180°C, wobei die Temperaturerhöhung im Bereich zwischen 0,1°C/min und 5°C/min ist, gefolgt von einem Halten bei etwa 180°C im Vakuum für mindestens 120h;
- Umwandeln des Gels in ein Xerogel mittels einer dritten Wärmebehandlung, wobei die Wärmebehandlung das Halten bei einer Trocknungstemperatur zwischen 850 und 1000°C für mindestens eine Stunde umfasst;
- Entwässern und Verdichten des Xerogels, bis der Siliciummonolith erhalten wird, mittels einer vierten Wärmebehandlung, wobei die vierte Wärmebehandlung das Halten bei einer Temperatur oberhalb von 1100°C für mindestens eine Stunde beinhaltet.

2. Verfahren nach Anspruch 1, wobei die Lösung weiterhin ein Trocknungsadditiv aufweist, welches Dimethylformamid umfasst.

3. Verfahren nach einem der vorhergehenden Ansprüche, wobei die Bestandteile zur Bildung des Sols in den folgenden Anteilen vorliegen:

   1 Teil Tetraethoxysilan oder Tetramethoxysilan, 4 Teile Methanol oder Ethanol, 2 Teile $H_2O$, 1 Teil Dimethylformamid und 0,005 Teil $NH_4OH$.

4. Verfahren nach einem der vorhergehenden Ansprüche, wobei die vierte Wärmebehandlung einen Spülschritt beinhaltet, welcher in Gegenwart eines Gemischs von $O_2/Cl_2$ stattfindet, und einen Vitrifizierungsschritt in Gegenwart von Helium.

5. Verfahren nach einem der vorhergehenden Ansprüche, wobei das Xerogel eine mittlere Porosität zwischen 5 nm und 23 nm aufweist.

6. Verfahren nach einem der vorhergehenden Ansprüche, wobei das Xerogel eine mittlere Porosität von 5 nm aufweist, wenn dieses aus Tetramethyloxysilan erhalten wird.

7. Verfahren nach einem der vorhergehenden Ansprüche, wobei das Xerogel eine mittlere Porosität von 23 nm aufweist, wenn dieses aus Tetraethoxysilan erhalten wird.

8. Verwendung eines gemäß einem der vorhergehenden Ansprüche erhaltenen Siliciummonoliths zur Gewinnung von optischen Fasern.

## Claims

1. A method for synthesis of a silica monolith according to the so-called "sol-gel" process including the following steps:

   • hydrolysis of tetraethyloxysilane or tetramethyloxysilane in order to form a hydrolyzed precursor followed by condensation of said hydrolyzed precursor in the presence of methanol or ethanol, in the presence of water and NH40H in order to form oligomeric clusters containing several silicon atoms;
   • dispersion of said oligomeric clusters in a solution in order to form a sol;
   • polymerization of the sol in order to obtain a gel by a first heat treatment, at a temperature below the boiling temperature of the constituents of the sol;
   • drying of the gel by a second heat treatment including exposure of the gel to about 90°C for at least 24 hours followed by an increase in temperature *in vacuo* between about 90°C and about 180°C, said increase in temperature being comprised between 0.1°C/min and 5°C/min followed by a hold of the temperature in vacuo at about 180°C at least during 120h;
   • transformation of the gel into a xerogel by a third heat treatment, said heat treatment including a hold at a drying temperature comprised between 850 and 1,000°C for at least one hour;
   • dehydration and densification of the xerogel until a silica monolith is obtained by a fourth heat treatment, said fourth heat treatment comprising a hold at a temperature above 1,100°C for at least one hour.

2. The method according to claim 1 wherein said solution further includes a drying additive comprising dimethylformamide.

3. The method according to any of the preceding claims wherein the constituents for forming the sol are present in the proportions:

   - 1 Part of tetraethyloxysilane or tetramethyloxysilane
   - 4 Parts of methanol or ethanol
   - 2 Parts of $H_2O$
   - 1 Part of dimethylformamide and

- 0.005 Part of $NH_4OH$

4. The method according to any of the preceding claims wherein the fourth heat treatment includes a purging step which is accomplished in the presence of an $O_2/Cl_2$ mixture and a vitrification step in the presence of helium.

5. The method according to any of the preceding claims wherein said xerogel has an average porosity comprised between 5 nm and 23 nm.

6. The method according to any of the preceding claims wherein said xerogel has an average porosity of 5 nm when the latter is obtained from tetramethyloxysilane.

7. The method according to any of the preceding claims wherein said xerogel has an average porosity of 23 nm when the latter is obtained from tetraethyloxysilane.

8. The use of the monolith obtained by the method according to any of the preceding claims for making optical fibers.

Fig. 1

Fig. 2

Fig. 3a

Fig. 3b

Fig.4

Longueur d'onde (nm)

Fig. 5

Figure 6

## RÉFÉRENCES CITÉES DANS LA DESCRIPTION

**Documents brevets cités dans la description**

- FR 2333628
- US 7125912 B
- WO 2004083144 A
- GB 2346141 A
- US 2001003910 A1
- US 2003078153 A